(19)

**Europäisches Patentamt**
**European Patent Office**
**Office européen des brevets**

(11) **EP 4 428 110 A1**

(12) **EUROPEAN PATENT APPLICATION**
published in accordance with Art. 153(4) EPC

(43) Date of publication:
**11.09.2024 Bulletin 2024/37**

(21) Application number: **22889942.3**

(22) Date of filing: **31.10.2022**

(51) International Patent Classification (IPC):
*C04B 28/02* (2006.01)        *C04B 14/04* (2006.01)
*C04B 14/06* (2006.01)        *C04B 14/20* (2006.01)
*C04B 14/28* (2006.01)        *C04B 16/02* (2006.01)
*C04B 16/06* (2006.01)        *C04B 18/08* (2006.01)
*C04B 18/14* (2006.01)        *C04B 38/00* (2006.01)

(52) Cooperative Patent Classification (CPC):
**C04B 14/04; C04B 14/06; C04B 14/20;**
**C04B 14/28; C04B 16/02; C04B 16/06;**
**C04B 18/08; C04B 18/14; C04B 28/02;**
**C04B 38/00;** Y02W 30/91

(86) International application number:
**PCT/JP2022/040788**

(87) International publication number:
**WO 2023/080122 (11.05.2023 Gazette 2023/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **02.11.2021 JP 2021179694**

(71) Applicant: **Kuraray Co., Ltd.**
**Kurashiki-shi, Okayama 710-0801 (JP)**

(72) Inventors:
• **HITOMI, Yoshinori**
**Okayama-shi, Okayama 702-8601 (JP)**

• **IMAGAWA, Akira**
**Okayama-shi, Okayama 702-8601 (JP)**
• **OGAWA, Atsuhisa**
**Okayama-shi, Okayama 702-8601 (JP)**
• **KATSUYA, Satoshi**
**Okayama-shi, Okayama 702-8601 (JP)**
• **HADA, Saburo**
**Tsurugashima-shi, Saitama 350-2205 (JP)**

(74) Representative: **Müller-Boré & Partner**
**Patentanwälte PartG mbB**
**Friedenheimer Brücke 21**
**80639 München (DE)**

(54) **POROUS MOLDED PLATE**

(57)     The present invention relates to a porous formed plate, comprising: 35 to 70% by mass of a substance not involved in a pozzolanic reaction; 20 to 61.5% by mass of a cement; 1 to 3% by mass of synthetic fibers; and 2.5 to 7% by mass of a pulp, wherein, in a pore size distribution of the formed plate that is determined by a mercury intrusion method, a ratio (B)/(A) of a pore volume (B) in a range of 6 to 560 nm with respect to a pore volume (A) in a range of 660 to 9,100 nm is 1.70 to 6.0.

**EP 4 428 110 A1**

**Description**

[Technical Field]

This patent application claims priority under the Paris Convention based on Japanese Patent Application No. 2021-179694 (filed on November 2, 2021), which is incorporated herein by reference in its entirety.
The present invention relates to a porous formed plate.

[Background Art]

A cementitious papermaking-processed plate is obtained by curing and hardening a sheet formed by a papermaking method in which a slurry prepared by suspending a cement and fibers in an aqueous medium is made into paper using a mesh (net). Such a papermaking method is, because of its production versatility, employed in a wide range of fields, especially in the construction field where it is often employed for the production of ceiling materials, interior materials, exterior materials, flooring materials, and the like. However, the cement production requires an extremely large amount of energy, and a large amount of carbon dioxide emissions associated with the cement production is viewed as a problem. In addition, when autoclave curing is required in the production process, a steam boiler or the like is usually used for the curing, and carbon dioxide is thus emitted in this process as well. Therefore, for reduction of carbon dioxide emissions, cementitious papermaking-processed plates that do not require autoclave curing and have a reduced cement ratio have been proposed.
For example, Patent Literature 1 discloses a panel that contains a hydraulic binder such as cement, a filler such as calcium carbonate, and synthetic fibers; Patent Literature 2 discloses an inorganic board produced by a papermaking process, which contains a matrix-forming hydratable raw material, an inorganic filler, reinforcing fibers, and a calcium silicate hydrate; and Patent Literature 3 discloses an energy-saving and environmentally-friendly lightweight partition board that is produced from a raw material containing a Portland cement, calcium carbonate, calcium oxide, a paraffin-diatomite composite phase change material, modified carbon fibers, activated bentonite, a rubber powder, a modified loess powder, a solid industrial waste, fibers, an initial strength-imparting agent, a water-reducing agent, a foaming agent, a rare-earth catalyst, and water at a specific ratio.

[Citation List]

[Patent Literature]

[Patent Literature 1] U.S. Patent Application Publication No. 2005/72056
[Patent Literature 2] Japanese Laid-Open Patent Publication No. 2005-205879
[Patent Literature 3] Chinese Patent Application Publication No. 108276023

[Summary of Invention]

[Technical Problem]

However, there is a constant demand for developing a formed plate having superior performance, such as a high flexural strength and a low dimensional change ratio, while reducing carbon dioxide emissions. Therefore, an object of the present invention is to provide a formed plate having a high flexural strength and a low dimensional change ratio.

[Solution to Problem]

The present inventors conducted detailed studies on formed plates to solve the above-described problem, thereby completing the present invention.
That is, the present invention encompasses the following preferred embodiments.

[1] A porous formed plate, comprising: 35 to 70% by mass of a substance not involved in a pozzolanic reaction; 20 to 61.5% by mass of a cement; 1 to 3% by mass of synthetic fibers; and 2.5 to 7% by mass of a pulp,
wherein, in a pore size distribution of the formed plate that is determined by a mercury intrusion method, a ratio (B)/(A) of a pore volume (B) in a range of 6 to 560 nm with respect to a pore volume (A) in a range of 660 to 9,100 nm is 1.70 to 6.0.

[2] The formed plate according to [1], wherein the substance not involved in a pozzolanic reaction is at least one substance selected from the group consisting of a calcium carbonate, a silica powder, and a talc.

[3] The formed plate according to [2], wherein the calcium carbonate is a heavy calcium carbonate.

[4] The formed plate according to any one of [1] to [3], further comprising at least one substance selected from the group consisting of a mica, a fly ash, and a silica fume.

[5] The formed plate according to any one of [1] to [4], wherein a total content of the synthetic fibers and the pulp is 7% by mass or less with respect to a total mass of the formed plate.

[6] The formed plate according to any one of [1] to [5], wherein the synthetic fibers have an average fiber diameter of 50 $\mu$m or less.

[7] The formed plate according to [6], wherein the average fiber diameter of the synthetic fibers is 5 $\mu$m to 40 $\mu$m.

[8] The formed plate according to any one of [1] to [7], wherein the synthetic fibers have an aspect ratio of 150 to 1,000.

[9] The formed plate according to any one of [1] to [8], wherein the synthetic fibers are at least one selected from the group consisting of polyvinyl alcohol-based fibers, polyethylene fibers, polypropylene fibers, acrylic fibers, aramid fibers, and nylon fibers.

[10] The formed plate according to any one of [1] to [9], having a water absorption rate of 15% to 28% as measured in accordance with JIS A5430:2018.

[11] The formed plate according to any one of [1] to [10], having a total heat value of 8.0 MJ/m$^2$ or less as measured in accordance with the exothermic test prescribed in JIS A5430:2018.

[12] The formed plate according to any one of [1] to [11], having a bulk density of 1.50 g/cm$^3$ or more as measured in accordance with JIS A5430:2018.

[13] The formed plate according to any one of [1] to [12], having a flexural strength of 15 N/mm$^2$ or more in a water-absorbed state as measured in accordance with JIS A1408:2017.

[14] The formed plate according to any one of [1] to [13], having a water absorption rate of 26% or lower as measured in accordance with JIS A5430:2018.

[15] The formed plate according to any one of [1] to [14], wherein the pore volume (B) is 2.50 mL/g or less.

[Advantageous Effects of Invention]

According to the present invention, a formed plate having a high flexural strength and a low dimensional change ratio can be provided.

[Description of Embodiments]

Embodiments of the present invention will now be described in detail. It is noted here, however, that the scope of the present invention is not limited to the below-described embodiments, and various modifications can be made within a scope that does not detract from the purpose of the present invention.

The formed plate of the present invention contains 35 to 70% by mass of a substance not involved in a pozzolanic reaction, 20 to 61.5% by mass of a cement, 1 to 3% by mass of synthetic fibers, and 2.5 to 7% by mass of a pulp, with respect to a total mass of the formed plate. When the ratio of each component deviates from the above-described specific range, it is difficult to obtain a formed plate that has both a high flexural strength and a low dimensional change ratio.

The formed plate preferably contains 40 to 67.5% by mass of a substance not involved in a pozzolanic reaction, 25 to 60.5% by mass of a cement, 1 to 2% by mass of synthetic fibers, and 2.5 to 6% by mass of a pulp, more preferably 45 to 65% by mass of a substance not involved in a pozzolanic reaction, 30 to 59.5% by mass of a cement, 1 to 1.5% by mass of synthetic fibers, and 3 to 5% by mass of a pulp, with respect to a total mass of the formed plate.

In one preferred embodiment, a total content of the synthetic fibers and the pulp is 7% by mass or less, preferably 6% by mass or less, with respect to a total mass of the formed plate. When the total content of the synthetic fibers and the pulp is equal to or less than the above-described upper limit value, a total heat value of the formed plate is likely to be further reduced, and this means that the formed plate has excellent flame retardancy.

The formed plate of the present invention is porous. In a pore size distribution of the formed plate that is determined by a mercury intrusion method, a ratio (B)/(A) of a pore volume (B) in a range of 6 to 560 nm with respect to a pore volume (A) in a range of 660 to 9,100 nm is 1.70 to 6.0, preferably 1.75 to 5.8, more preferably 1.80 to 5.6, particularly preferably 1.85 to 5.4. When this ratio (B)/(A) is preferably 5.3 or lower, more preferably 5.1 or lower, still more preferably lower than 5.0, a higher yield rate in the production of the formed plate is likely to be obtained in addition to a higher flexural strength and a lower dimensional change ratio. The ratio (B)/(A) may be 4.9 or lower, 4.8 or lower, 4.5 or lower, or 4.0 or lower. Meanwhile, the ratio (B)/(A) may be preferably 2.00 or higher, more preferably 2.10 or higher, still more preferably 2.20 or higher, yet still more preferably 2.50 or higher. The ratio (B)/(A) can be adjusted to be a desired value by, for example, using a substance having a specific Blaine specific surface area as the substance not involved in a pozzolanic reaction, and/or adjusting the conditions (particularly the press pressure) at the time of forming. The pore volume ratio (B)/(A) can be determined by the method described below in the section of Examples.

The present inventors discovered that, surprisingly, a high flexural strength and a low dimensional change ratio can both be achieved in a formed plate by allowing the formed plate to contain the above-described four components (substance not involved in a pozzolanic reaction, cement, synthetic fibers, and pulp) at a specific ratio and have a specific value of the ratio (B)/(A). The reason for this is not clear; however, the following action mechanism is presumed. The formed plate of the present invention can be produced by hardening a curable composition containing the above-described four components. In this hardening process, by applying an appropriate pressure to perform forming, the substance not involved in a pozzolanic reaction is allowed to moderately fill the voids of the formed plate in the hardening process, as a result of which the adhesion between the synthetic fibers and the cement matrix is enhanced. In addition, the substance not involved in a pozzolanic reaction does not cause a defect such as cracking or warping that may occur in association with the progress of a pozzolanic reaction. Therefore, it is presumed that the resulting formed product exhibits a high flexural strength and a low dimensional change ratio. It is noted here, however, that the above-described action mechanism is a presumption, and the present invention is not limited thereto.

The pore volume (B) in a pore size range of 6 to 560 nm is preferably 2.50 mL/g or less, more preferably 2.40 mL/g or less, particularly preferably 2.30 mL/g or less, still more preferably 2.20 mL/g or less. When the pore volume (B) is equal to or less than the above-described upper limit value, the resulting formed plate tends to have excellent flexural strength both in a dry state and in a water-absorbed state. The feature that the pore volume (B) is equal to or less than the above-described upper limit value is associated with high adhesion between the synthetic fibers and the cement matrix as described above, and it is presumed that, as a result, the formed plate tends to have excellent flexural strength both in a dry state and in a water-absorbed state. In addition, since pores in a range of 6 to 560 nm in size greatly affect water absorption, it is presumed that the effects of water are reduced with the pore volume (B) being equal to or less than the above-described upper limit value, and that the flexural strength in a water-absorbed state in particular tends to be high.

Further, when the pore volume (B) is preferably 2.10 mL/g or less, more preferably 2.00 mL/g or less, a higher yield rate is likely to be obtained in the production of the formed plate.

The pore volume (B) can be adjusted to be a desired value by, for example, using a substance having a specific Blaine specific surface area as the substance not involved in a pozzolanic reaction, and/or adjusting the conditions (particularly the press pressure) at the time of forming. The pore volume (B) can be measured by the method described below in the section of Examples.

<Substance Not Involved in Pozzolanic Reaction>

The substance not involved in a pozzolanic reaction is preferably at least one substance selected from the group consisting of a calcium carbonate, a silica powder, and a talc. From the standpoint of availability and cost, the substance not involved in a pozzolanic reaction is preferably a heavy calcium carbonate.

The substance not involved in a pozzolanic reaction has a Blaine specific surface area of preferably 2,200 to 12,000 $cm^2/g$, more preferably 3,000 to 11,000 $cm^2/g$, particularly preferably 4,000 to 11,000 $cm^2/g$. When the Blaine specific surface area is in this range, the formed plate is likely to attain a specific value of the ratio (B)/(A). When two or more substances that are not involved in a pozzolanic reaction and have different values of the Blaine specific surface area are used, the Blaine specific surface area corresponding to the ratio of the substances is preferably in the above-described range. For example, when a substance 1 that is not involved in a pozzolanic reaction and has a Blaine specific surface area of 2,500 $cm^2/g$ and a substance 2 that is not involved in a pozzolanic reaction and has a Blaine specific surface area of 6,500 $cm^2/g$ are used at a mass ratio of 50:50, the Blaine specific surface area corresponding to the ratio of the combination of the substances 1 and 2 is calculated to be 4,500 $cm^2/g$ (= 2,500 $\times$ 0.5 + 6,500 $\times$ 0.5). When the Blaine specific surface area of the substance not involved in a pozzolanic reaction is preferably 10,000 $cm^2/g$ or less, more preferably 9,000 $cm^2/g$ or less, a higher yield rate is likely to be obtained in the production of the formed plate.

The Blaine specific surface area can be measured by an air permeation method in accordance with JIS R5201:2015.

Such substances not involved in a pozzolanic reaction are commercially available, and examples of commercially available products include calcium carbonate (first grade) manufactured by Sankyo Seifun Co., Ltd.

<Cement>

Examples of the cement used in the present invention include: Portland cements, such as an ordinary Portland cement, a high early strength Portland cement, an ultra-high early strength Portland cement, and a moderate-heat Portland cement; alumina cements; blast-furnace cements; silica cements; fly ash cements; and white Portland cements. These cements may be used singly, or in combination of two or more kinds thereof.

From the standpoint of versatility and/or cost, it is preferred to use an ordinary Portland cement. From the standpoint of being able to obtain early expression of strength, it is preferred to use a high early strength Portland cement or an ultra-high early strength Portland cement. From the standpoint of being able to obtain an effect of improving the long-term strength, it is preferred to use a blast-furnace cement.

The above-described cements are commercially available, and examples of commercially available products include ordinary Portland cements manufactured by Taiheiyo Cement Corporation.

<Synthetic Fibers>

The synthetic fibers have an average fiber diameter of preferably 5 $\mu$m or more, more preferably 6 $\mu$m or more, particularly preferably 7 $\mu$m or more, but preferably 50 $\mu$m or less, more preferably 40 $\mu$m or less, particularly preferably 30 $\mu$m or less. When the average fiber diameter of the synthetic fibers is equal to or more than the above-described lower limit value and equal to or less than the above-described upper limit value, both favorable dispersion of the synthetic fibers in the curable composition and favorable fiber reinforcement in the formed product are likely to be achieved. The average fiber diameter is determined by randomly taking out 100 fibers, measuring the diameter of each of the fibers in a lengthwise central portion under a light microscope, and then calculating the average of the thus measured values.

From the standpoint of being able to achieve both favorable dispersion of the fibers in the curable composition and favorable fiber reinforcement in the formed product, the synthetic fibers have an average fiber length of preferably 2 to 30 mm, more preferably 2 to 20 mm. The average fiber length can be determined in accordance with JIS L1015:2010.

The synthetic fibers have an aspect ratio (fiber length/fiber diameter) of preferably 150 or higher, more preferably 175 or higher, particularly preferably 200 or higher, but preferably 1,000 or lower, more preferably 900 or lower, particularly preferably 800 or lower. When the aspect ratio of the synthetic fibers is equal to or higher than the above-described lower limit value and equal to or lower than the above-described upper limit value, both favorable dispersion of the synthetic fibers in the curable composition and favorable fiber reinforcement in the formed product are likely to be achieved. The aspect ratio can be calculated from the average fiber length and the average fiber diameter.

The synthetic fibers have a fiber tensile strength of preferably 3 cN/dtex or more, more preferably 5 cN/dtex or more, particularly preferably 7 cN/dtex or more. When the fiber tensile strength of the synthetic fibers is equal to or more than the above-described lower limit value, the fiber reinforcement in the formed plate is likely to be improved. In the present invention, an upper limit value of the fiber tensile strength of the synthetic fibers is selected as appropriate in accordance with the type of the fibers; however, it is, for example, 30 cN/dtex or less. The fiber tensile strength can be determined in accordance with JIS L1015:2010.

The synthetic fibers may be inorganic synthetic fibers or organic synthetic fibers. The synthetic fibers are preferably organic synthetic fibers, more preferably at least one selected from the group consisting of polyvinyl alcohol (hereinafter, may be referred to as "PVA") -based fibers, polyethylene fibers, polypropylene fibers, acrylic fibers, aramid fibers, and nylon fibers.

It is preferred to use PVA-based fibers and/or polypropylene fibers since these fibers are inexpensive and likely to impart the formed plate with superior reinforcement.

When PVA-based fibers such as vinylon fibers are used as the synthetic fibers, the PVA-based fibers may have the following properties. The polymerization degree of a PVA-based polymer constituting the PVA-based fibers may be selected as appropriate in accordance with the intended purpose, and is not particularly limited. Considering the mechanical properties and the like of the resulting fibers, the average polymerization degree of the PVA-based polymer, which is determined from the viscosity of a 30°C aqueous solution, is preferably about 500 to 20,000, more preferably about 800 to 15,000, particularly preferably about 1,000 to 10,000. Especially, from the standpoint of the strength of the resulting fibers, the average polymerization degree of the PVA-based polymer is preferably 1,000 or higher, more preferably 1,200 or higher, still more preferably 1,500 or higher, particularly preferably 1,750 or higher. The PVA-based polymer may be a medium-polymerization-degree product having an average polymerization degree of 1,000 or higher but lower than 3,000, or may be a high-polymerization-degree product having an average polymerization degree of 3,000 or higher.

The saponification degree of the PVA-based polymer may also be selected as appropriate in accordance with the intended purpose, and is not particularly limited. From the standpoint of the dynamic properties of the resulting fibers, the saponification degree of the PVA-based polymer may be, for example, 95% by mole or higher, preferably 98% by mole or higher. The saponification degree of the PVA-based polymer may be 99% by mole or higher, or 99.8% by mole or higher. When the saponification degree of the PVA-based polymer is equal to or higher than the above-described lower limit value, the resulting fibers are likely to achieve favorable mechanical properties, process passability, production cost, and the like.

The PVA-based fibers used in the present invention can be produced by dissolving the above-described PVA-based polymer in a solvent, spinning the resulting solution by any method of wet spinning, dry-wet spinning, and dry spinning, and subsequently dry-heat drawing the thus spun product. The "wet spinning" refers to a method of discharging a spinning dope from a spinning nozzle directly into a solidification bath. The "dry-wet spinning" refers to a method of once discharging a spinning dope from a spinning nozzle into the air or an inert gas at a certain distance and subsequently introducing the discharged spinning dope to a solidification bath. The "dry spinning" refers to a method of discharging a spinning dope from a spinning nozzle into the air or an inert gas. After the spinning, the resulting PVA-based fibers may be subjected to a drawing treatment if necessary. In addition, the PVA-based fibers may be subjected to an acetalization treatment and the like that are generally performed.

The solvent used in the spinning dope of the PVA-based fibers is not particularly limited as long as it can dissolve PVA. For example, one or a combination of two or more of water, dimethylsulfoxide (DMSO), dimethylformamide, dimethylacetamide, and a polyhydric alcohol (e.g., glycerol, ethylene glycol, or triethylene glycol) may be used. In the present invention, when wet spinning is performed, it is preferred to use water or an organic solvent as the solvent. Among the above-described solvents, water and DMSO are particularly preferred from the standpoint of the ease of supply and the effect on environmental load. The polymer concentration in the spinning dope varies depending on the composition and the polymerization degree of the PVA-based polymer as well as the type of the solvent; however, it is generally 6 to 60% by mass.

The above-described solvent may be used in the dry spinning as well. In this case, water or an organic solvent may be used.

As long as the effects of the present invention are not impaired, the spinning dope may contain additives and the like depending on the intended purpose, in addition to the PVA-based polymer. Examples of the additives include boric acid, surfactants, antioxidants, decomposition inhibitors, antifreezing agents, pH modifiers, masking agents, colorants, and oil agents.

A solvent used in the solidification bath may be selected as appropriate in accordance with the type of the solvent used in the spinning dope. When the spinning dope is an aqueous solution, an aqueous solution of an inorganic salt (e.g., sodium sulfate, ammonium sulfate, sodium carbonate, or sodium hydroxide) or an alkaline aqueous solution, which is capable of solidifying the PVA-based polymer, may be used as the solidification bath. When the spinning dope is an organic solvent solution, an organic solvent capable of solidifying the PVA-based polymer, for example, an alcohol such as methanol, ethanol, propanol, or butanol, or a ketone such as acetone, methyl ethyl ketone, or methyl isobutyl ketone, may be used as the solidification bath.

In the present invention, PVA-based fibers obtained by dry spinning, or PVA-based fibers obtained by wet spinning from a spinning dope containing water or an organic solvent as a solvent are preferred from the standpoint of fiber tensile strength.

For the purpose of extracting and removing the solvent of the spinning dope from solidified raw yarns, the raw yarns may be passed through an extraction bath and may be simultaneously wet-drawn during the extraction. In addition, after the wet drawing, the resulting fibers are dried and, if necessary, may be further dry-heat drawn. When drawing is performed, a total draw ratio (a product of a draw ratio in wet drawing and a draw ratio after drying) may be, for example, about 5 to 25, preferably about 8 to 20.

As the synthetic fibers, commercially available fibers may be used, and examples thereof include: organic fibers, such as polyvinyl alcohol-based fibers manufactured by Kuraray Co., Ltd., polypropylene fibers manufactured by Daiwabo Co., Ltd., and nylon fibers manufactured by Toray Industries, Inc.; and inorganic fibers, such as glass fibers manufactured by Nippon Electric Glass Co., Ltd. and Taiheiyo Materials Corporation.

<Pulp>

The pulp may or may not be subjected to a beating treatment. From the standpoint of being able to obtain desired flexural strength and impact strength, it is preferred to use a beaten pulp, and it is more preferred to use a pulp having a CSF value of 50 to 400 mL, more preferably 100 to 150 mL, in terms of the beating degree measured in accordance with the Canadian Standard freeness method prescribed in JIS P8121-2:2012 "Determination of Drainability". In the production of the formed plate, from the standpoint of being able to obtain a desired yield rate, it is preferred to use a pulp having a CSF value of 100 to 150 mL when the below-described cylinder papermaking method is employed, or it is preferred to use a pulp having a CSF value of 150 to 400 mL when a flow-on papermaking method is employed.

As the pulp, a wide variety of pulps can be used. Examples of the pulp include pulps of coniferous trees, broad-leaved trees, Manila hemp, oriental paperbush (*Edgeworthia chrysantha*), paper mulberry (*Broussonetia kazinoki*), ganpi (*Diplomorpha sikokiana*), sarago (*Wikstroemia* spp.), muluberry, straw, bamboo, common reed, sabi grass, lalang, esparto, bagasse, sisal, kenaf, linter, banana, and recycled water-paper. Examples of the coniferous trees include those belonging to the families Taxodiaceae, Pinaceae, Cupressaceae, and Araucariaceae, and examples of the broad-leaved trees include those belonging to the families Ulmaceae, Fagaceae, Myrtaceae, Cercidiphyllaceae, Oleaceae, Rutaceae, Betulaceae, Aceraceae, Juglandaceae, Tiliaceae, Araliaceae, Sapotaceae, Celastraceae, Apocynaceae, Verbenaceae, Magnoliaceae, and Sterculiaceae. These pulps may be bleached pulps or unbleached pulps. The above-exemplified pulps may be used singly, or in combination of two or more kinds thereof.

These pulps are commercially available, and examples of commercially available products include CELLOFIBER manufactured by Paltex Co., Ltd.

<Other Components>

The formed plate may optionally further contain at least one substance selected from the group consisting of a mica, a fly ash, and a silica fume.

When the formed plate contains a mica and/or a silica fume, the content or total content thereof is preferably 2 to 14% by mass, more preferably 2 to 10% by mass, still more preferably 3 to 10% by mass, yet still more preferably 4 to 8% by mass, with respect to a total mass of the formed plate. In this embodiment, a formulation in which the cement is partially substituted with the mica and/or the silica fume is preferred. When the formed plate contains a mica, a smaller dimensional change ratio and a flame retardancy-improving effect (i.e., reduction in the total heat value) are likely to be exerted. When the formed plate contains a silica fume, the formed plate is likely to exhibit a higher flexural strength. This is believed to be because not only the silica fume is also involved in a pozzolanic reaction but also a cement matrix microfilling effect is likely to be obtained due to small particle size of the silica fume. On the other hand, an increase in the content of the silica fume leads to an increase in the viscosity of the curable composition, and this tends to deteriorate the papermaking property in the cylinder mesh step. By controlling the content of the silica fume to be preferably 10% by mass or less with respect to a total mass of the formed plate, favorable papermaking property is likely to be ensured in the cylinder mesh step.

When the formed plate contains a fly ash, the content thereof is preferably 10 to 30% by mass, more preferably 15 to 25% by mass, with respect to a total mass of the formed plate. In this embodiment, from the standpoint of effective utilization of a recycled raw material and/or cost reduction, a formulation in which the substance not involved in a pozzolanic reaction is partially substituted with the fly ash is preferred. Further, when the formed plate contains a fly ash, since the fly ash is also involved in a pozzolanic reaction, the formed plate is likely to exhibit more favorable long-term age strength and higher flexural strength.

From the standpoint of being able to obtain desired dimensional change ratio and flexural strength, the mica is preferably a 30 to 200-mesh-pass product, more preferably a 40 to 120-mesh-pass product, particularly preferably a 60 to 80-mesh-pass product, as measured by the JIS sieving test.

As the fly ash, any of a Type I fly ash (having a Blaine specific surface area of 5,000 or more), a Type II fly ash (having a Blaine specific surface area of 2,500 or more), a Type III fly ash (having a Blaine specific surface area of 2,500 or more), and a Type IV fly ash (having a Blaine specific surface area of 1,500 or more), which are defined in JIS A6201:2015, may be used.

As the silica fume, any silica fume defined in JIS A6207:2016 may be used. The average particle size of silica fume is generally 0.1 to 0.5 $\mu$m.

Such mica, fly ash, and silica fume are commercially available. Examples of commercially available mica include mica manufactured by TOMOE Engineering Co., Ltd.; examples of commercially available fly ash include FINASH, YONDEN FLY-ASH, and ECOASH, which are manufactured by Yonden Business Co., Inc.; and examples of commercially available silica fume include EFACO manufactured by TOMOE Engineering Co., Ltd.

<Optional Additives and Auxiliary Agents>

The formed plate may further contain one or more optional additives and auxiliary agents. In order to improve the yield rate in the below-described method of producing the formed plate by a papermaking method, it is preferred to add an aqueous solution of an anionic polymer coagulant that has a concentration of 0.5 to 2 g/L to the curable composition. In this process, the aqueous solution is preferably added such that the concentration of the anionic polymer coagulant in the curable composition is preferably 50 to 250 ppm/solids, more preferably 75 to 175 ppm/solids, still more preferably 100 to 150 ppm/solids. Examples of the anionic polymer coagulant include IK FLOCK T210 manufactured by Nippon Giken Co., Ltd.

<Method of Producing Formed plate>

The formed plate of the present invention is preferably produced by a papermaking method. The "papermaking method" refers to a method of filtering a slurry (curable composition), which is prepared by suspending solids such as a cement in an aqueous medium, through a metal wire mesh, and subsequently forming the thus filtered out sheet-like material. The papermaking method encompasses, for example, a cylinder papermaking method (Hatschek method) or Fourdrinier papermaking method in which a formed plate is obtained by sequentially disposing a filtered-out thin sheet-like material in layers to a desired thickness on a making roll, and a flow-on papermaking method in which a formed plate is obtained by supplying a thick slurry onto a felt and sequentially disposing the slurry in layers to a desired thickness on a making roll in a single or plural operations. A cylinder papermaking method or Fourdrinier papermaking method is preferred from the standpoint of the ease of obtaining a uniform formed plate and the ease of adjusting the thickness, and a cylinder papermaking method is more preferred from the standpoint of enabling mass production.

A production method based on a cylinder papermaking method usually includes:

the step of preparing a curable composition by mixing a substance not involved in a pozzolanic reaction, a cement, synthetic fibers, a pulp, and water along with, if necessary, the above-described other components, optional additives, and auxiliary agents;

the step of preparing a papermaking sheet from the thus obtained curable composition using a cylinder mesh by a papermaking process and disposing the papermaking sheet in layers to a desired thickness;

the step of extracting liquid out of the thus layered papermaking sheet by applying thereto a pressure; and

the step of curing the thus liquid-extracted sheet.

A method of preparing the curable composition is not particularly limited. The curable composition can be prepared by mixing components using a mixing means such as a known or commonly used mixer. Examples of the mixing means include mixers having high stirring performance, such as a vertical mixer, a blade mixer, a screw-type mixer, a cone mixer, and an agitator-type mixer that are used in a papermaking method.

An order of mixing the components is not particularly limited; however, from the standpoint of the ease of obtaining a curable composition in which solid components are uniformly dispersed, it is preferred to: add the pulp to water and stir the resultant; subsequently add and stir the substance not involved in a pozzolanic reaction, the cement, and the optional other components, additives, and auxiliary agents in an arbitrary order; and finally add the synthetic fibers.

The solid concentration of the curable composition is usually 55 to 6% by mass, preferably 40 to 8% by mass, more preferably 25 to 10% by mass.

It is preferred that, with respect to a total mass of the solids of the curable composition, i.e., with respect to a total mass of the components other than water in the curable composition, the amount of the substance not involved in a pozzolanic reaction be 35 to 70% by mass (preferably 40 to 67.5% by mass, more preferably 45 to 65% by mass), the amount of the cement be 20 to 61.5% by mass (preferably 25 to 60.5% by mass, more preferably 30 to 59.5% by mass), the amount of the synthetic fibers be 1 to 3% by mass (preferably 1 to 2% by mass, more preferably 1 to 1.5% by mass), the amount of the pulp be 2.5 to 7% by mass (preferably 2.5 to 6% by mass, more preferably 3 to 5% by mass), the amount of a mica be 0 to 10% by mass (e.g., 2 to 10% by mass or 4 to 8% by mass), the amount of a fly ash be 0 to 30% by mass (e.g., 10 to 30% by mass or 15 to 25% by mass), the amount of a silica fume be 0 to 14% by mass (e.g., 2 to 14% by mass, 0 to 10% by mass, 2 to 10% by mass, 3 to 10% by mass, or 4 to 8% by mass), and the amount of the optional additives and auxiliary agents be 0 to 3% by mass (e.g., 50 to 250 ppm, 75 to 175 ppm, or 100 to 150 ppm in the case of an aqueous solution of an anionic polymer coagulant).

Subsequently, the curable composition is loaded to a feed tank of a wet papermaking machine, and the solid concentration of the curable composition is usually adjusted with process circulating water to be about 10 to 1 % by mass (preferably 8 to 3% by mass). The curable composition supplied from the feed tank to a vat is made into a papermaking sheet on the surface of a cylinder mesh by rotation of the cylinder mesh that is provided in the vat and has a negative pressure inside, and this papermaking sheet is transferred to a making roll. The papermaking sheet is disposed in layers to a desired thickness on the making roll, and the thus layered papermaking sheet is cut at a prescribed length.

In one preferred embodiment, the yield rate in the papermaking step is preferably 85% or higher, more preferably 90% or higher. When the yield rate is equal to or higher than this lower limit value, a higher flexural strength, a higher interlayer adhesive strength, and/or a lower dimensional change ratio are likely to be obtained. The yield rate can be adjusted to be equal to or higher than the above-described lower limit value by adjustment of the Blaine specific surface area of the substance not involved in a pozzolanic reaction, adjustment of the beating degree of beaten pulp, and/or selection of the mesh size of the cylinder mesh. From the standpoint of being able to attain both satisfactory yield rate and satisfactory productivity, the mesh size of the cylinder mesh is preferably 45 to 55 mesh/inch. The yield rate in the papermaking step can be determined by the method described below in the section of Examples.

As described above, the formed plate of the present invention contains 35 to 70% by mass of a substance not involved in a pozzolanic reaction, 20 to 61.5% by mass of a cement, 1 to 3% by mass of synthetic fibers, and 2.5 to 7% by mass of a pulp. In a case where the formed plate can be produced by a papermaking method such that the ratios of these components contained in the curable composition do not change, the ratios of the respective components in the curable composition may be the same as those in the formed plate. Such a case is, for example, a case where the yield rate in the papermaking step is preferably 85% or higher (preferably 90% or higher). In this case, the formed plate of the present invention is a porous formed plate based on a curable composition that contains 35 to 70% by mass of a substance not involved in a pozzolanic reaction, 20 to 61.5% by mass of a cement, 1 to 3% by mass of synthetic fibers, and 2.5 to 7% by mass of a pulp, wherein, in a pore size distribution of the formed plate that is determined by a mercury intrusion method, a ratio (B)/(A) of a pore volume (B) in a range of 6 to 560 nm with respect to a pore volume (A) in a range of 660 to 9,100 nm is 1.70 to 6.0. The curable composition may optionally further contain other components (one or more substances selected from the group consisting of a mica, a fly ash, and a silica fume) at the same ratio as in the above-described formed plate, and may further contain optional additives and auxiliary agents at the above-described ratio.

The number of papermaking sheets to be disposed in layers varies depending on the solid concentration of the curable composition and the thickness of the formed plate to be produced; however, it is usually 12 to 18 when the thickness of the formed plate is about 6 mm.

Next, liquid is extracted by applying a pressure to the thus cut sheet using a press machine.

The pressure applied by the press machine is preferably 2 to 30 MPa, more preferably 7 to 27 MPa, particularly preferably 15 to 25 MPa. The duration of applying the pressure is usually 10 to 60 minutes, preferably 15 to 50 minutes, more preferably 20 to 40 minutes. When the pressure and the duration of applying the pressure are in the above-described respective ranges, a desired pore volume ratio (B)/(A) is likely to be obtained in the resulting formed plate and, consequently, a high flexural strength and a low dimensional stability are likely to be obtained.

Subsequently, the thus liquid-extracted sheet is cured.

This curing causes hardening to proceed. The hardening is attributed to a hydration reaction (condensation reaction) of the cement component; however, when the moisture in the sheet evaporates, the hydration reaction of the cement component may be inhibited, causing the hardening not to proceed. Therefore, it is preferred to perform primary curing in a high-humidity atmosphere in which the moisture in the sheet does not evaporate, i.e. in an atmosphere having a relative humidity of preferably 30 to 100%, more preferably 50 to 100%, still more preferably 65 to 100%, yet still more preferably 80 to 100%, particularly preferably 90 to 100% (e.g., 100%), and then perform secondary curing in another high-humidity atmosphere (in an atmosphere having a relative humidity of preferably 30 to 100%, more preferably 40 to 90%, still more preferably 50 to 80%) in which the sheet is placed in a moisture-impermeable container, bag, or the like, or sandwiched between plastic plates, plastic films (e.g., polyethylene sheets), or metal plates, and thereby brought into a state where the moisture in the sheet is less likely to evaporate.

The curing temperature is not particularly limited. The primary curing temperature is, for example, 10 to 90°C, preferably 30 to 80°C, more preferably 40 to 80°C. The curing temperature may be changed during curing within the above-described temperature range. The secondary curing temperature is, for example, 10°C to 70°C, preferably 20°C to 50°C.

The primary curing time varies depending on the composition of the curable composition and the curing temperature; however, it is usually 6 hours to 48 hours, preferably 8 hours to 36 hours, more preferably 12 hours to 24 hours. The secondary curing time is usually 1 day to 14 days.

Underwater curing may be performed as the secondary curing. In this case, usually, the water temperature is 10 to 30°C, and the curing time is 8 hours to 13 days. After performing underwater curing at a water temperature of 10 to 30°C for 4 hours to 24 hours, the above-described secondary curing may be performed for 2 days to 13 days.

A formed plate is obtained by drying the sheet after the secondary curing.

A drying method is not particularly limited as long as a uniformly dried formed plate is obtained. Usually, the equilibrium moisture content of the formed plate (e.g., the moisture content that is reached when the formed plate is stored in a well-ventilated room for at least 7 days) is about 6% by mass to about 10% by mass; therefore, the drying is performed such that the resulting formed plate has a moisture content at the same level as the equilibrium moisture content. The moisture content and the equilibrium moisture content of the formed plate can be simply measured using a Kett moisture meter. Alternatively, the moisture content and the equilibrium moisture content can be calculated using the following equation after measuring the weight ($W_1$) of the formed plate obtained after the drying and subsequently measuring the weight ($W_2$) of the formed plate dried to a constant weight in an air dryer equipped with a stirrer and set at 105°C:

$$\{(W_1 - W_2)/W_2\} \times 100$$

The formed plate obtained after the drying has a ratio (B)/(A) of 1.70 to 6.0 as described above. Further, all of the embodiments and preferred embodiments that are described for the formed plate of the present invention can be regarded as embodiments and preferred embodiments of the formed plate obtained after the drying.

The thickness of the formed plate of the present invention varies depending on the intended use thereof; however, it is, for example, 3 to 30 mm. For example, when the formed plate is used as a wall material, the thickness of the formed plate is preferably 4 mm to 20 mm, while when the formed plate is used as a flooring material, the thickness of the formed plate is preferably 8 mm to 30 mm. An upper limit value of the thickness of the formed plate is not particularly limited; however, it is preferably about 15 mm in a cylinder papermaking method, or preferably about 50 mm in a Fourdrinier papermaking method. The thickness of the formed plate can be determined as appropriate by adjusting the number of papermaking sheets to be disposed in layers and/or the thickness of the liquid-extracted sheet. The thickness of the formed plate can be determined in accordance with a general method by measuring the thickness at plural spots using, for example, digital calipers, and calculating the average of the thus measured values.

The length and width dimensions of the formed plate of the present invention vary depending on the dimensions of a papermaking machine and a press machine, and may be, for example, 3 × 6 shaku (910 mm × 1,820 mm), 4 × 8 shaku (1,210 mm × 2,440 mm), or 4 × 10 shaku (1,210 mm × 3,030 mm). Needless to say, a smaller formed plate having desired dimensions can be cut out from a formed plate having the above-described large dimensions.

The formed plate of the present invention has a bulk density of, for example, 1.45 to 1.8 g/cm$^3$, preferably 1.50 to 1.75 g/cm$^3$, more preferably 1.55 to 1.75 g/cm$^3$, as measured in accordance with JIS A5430:2018. When the bulk density is in this range, desired dimensional change ratio, flexural strength, interlayer adhesive strength, and/or flame retardancy are likely to be obtained. The bulk density can be adjusted to be in the above-described range by adjusting the types of the above-described four components, the mixing ratio of the four components, the press pressure, and/or the press time.

The formed plate of the present invention has a flexural strength in a dry state of preferably 10 N/mm$^2$ or more, more preferably 15 N/mm$^2$ or more, still more preferably 20 N/mm$^2$ or more, as measured in accordance with JIS A1408:2017. The flexural strength in a dry state can be adjusted to be equal to or more than the above-described lower limit value by adjusting, for example, the Blaine specific surface area of the substance not involved in a pozzolanic reaction, the mixing ratio of the above-described four components, the press pressure, and/or the press time. An upper limit of the flexural strength in a dry state is not particularly limited; however, it is usually 50 N/mm$^2$ or less.

The formed plate of the present invention has a flexural strength in a water-absorbed state of preferably 5 N/mm$^2$ or more, more preferably 10 N/mm$^2$ or more, still more preferably 15 N/mm$^2$ or more, as measured in accordance with JIS A1408:2017. The flexural strength in a water-absorbed state can be adjusted to be equal to or more than the above-described lower limit value by adjusting, for example, the Blaine specific surface area of the substance not involved in a pozzolanic reaction, the mixing ratio of the above-described four components, the press pressure, and/or the press time. An upper limit of the flexural strength in a water-absorbed state is not particularly limited; however, it is usually 35 N/mm$^2$ or less.

The formed plate of the present invention has a dimensional change ratio (length change ratio) of preferably 0.150% or lower, more preferably 0.130% or lower, particularly preferably 0.100 or lower, as measured in accordance with JIS A5430:2018. The dimensional change ratio can be adjusted to be equal to or lower than the above-described upper limit value by adjusting, for example, the Blaine specific surface area of the substance not involved in a pozzolanic reaction, the mixing ratio of the above-described four components, the press pressure, and/or the press time.

The present inventors discovered that the formed plate of the present invention has a low water absorption rate. When the water absorption rate is low, the dimensions of the formed plate are unlikely to fluctuate with the atmosphere (e.g., season, region, and/or use environment) in which the formed plate is used, which is preferred. In addition, the flexural strength of the formed plate in a water-absorbed state is improved, which is also preferred.

The water absorption rate of the formed plate of the present invention is preferably 28% or lower, more preferably 26% or lower, still more preferably 24% or lower, yet still more preferably 22% or lower, particularly preferably 20% or lower, as measured in accordance with JIS A5430:2018. A lower limit value of the water absorption rate is not limited; however, it is preferably 15% or higher.

The water absorption rate can be adjusted to be equal to or higher than the above-described lower limit value and equal to or lower than the above-described upper limit value by adjusting, for example, the ratio of the pulp, the Blaine specific surface area of the substance not involved in a pozzolanic reaction, the press pressure, and/or the press time.

The formed plate has a total heat value of preferably 8.0 MJ/m$^2$ or less, more preferably 7.0 MJ/m$^2$ or less, still more preferably 6.0 MJ/m$^2$ or less, as measured in accordance with the exothermic test prescribed in JIS A5430:2018. When the total heat value is equal to or less than the above-described upper limit value, the formed plate has a higher flame retardancy. A lower limit value of the total heat value is not limited; however, it is, for example, 4.0 MJ/m$^2$ or more.

The total heat value can be adjusted to be equal to or less than the above-described upper limit value by, for example, reducing the ratio of organic materials (pulp and synthetic organic fibers) in the formed plate, and/or adjusting the ratio (B)/(A).

The formed plate has an impact strength in a dry state (Type 1 test piece, unnotched) of preferably 1.5 kJ/m$^2$ or more, more preferably 1.8 kJ/m$^2$ or more, still more preferably 2.1 kJ/m$^2$ or more, as measured in accordance with JIS K7111-1:2012 "Plastics - Determination of Charpy impact properties". The impact strength in a dry state can be adjusted to be equal to or more than the above-described lower limit value by adjusting, for example, the press pressure and/or the press time. An upper limit of the impact strength in a dry state is not particularly limited; however, it is usually 7 kJ/m$^2$ or less.

The formed plate has an impact strength in a water-absorbed state (Type 1 test piece, unnotched) of preferably 2 kJ/m$^2$ or more, more preferably 2.5 kJ/m$^2$ or more, still more preferably 3.0 kJ/m$^2$ or more, as measured in accordance with JIS K7111-1:2012 "Plastics - Determination of Charpy impact properties". The impact strength in a water-absorbed state can be adjusted to be equal to or more than the above-described lower limit value by adjusting, for example, the press pressure and/or the press time. An upper limit of the impact strength in a water-absorbed state is not particularly limited; however, it is usually 10 kJ/m$^2$ or less.

The formed plate has an interlayer adhesive strength in a dry state of preferably 1.5 N/mm$^2$ or more, more preferably 2.0 N/mm$^2$ or more, still more preferably 2.5 N/mm$^2$ or more. When the interlayer adhesive strength in a dry state is equal to or more than the above-described lower limit value, interlayer delamination during the use can be inhibited, which is preferred. The interlayer adhesive strength in a dry state can be adjusted to be equal to or more than the above-described lower limit value by adjusting, for example, the Blaine specific surface area of the substance not involved in a pozzolanic reaction, the press pressure, and/or the press time. An upper limit of the interlayer adhesive strength in a dry state is not particularly limited; however, it is usually 6 N/mm$^2$ or less.

The formed plate has an interlayer adhesive strength in a water-absorbed state of preferably 0.2 N/mm$^2$ or more, more preferably 0.3 N/mm$^2$ or more, still more preferably 0.5 N/mm$^2$ or more. When the interlayer adhesive strength in a water-absorbed state is equal to or more than the above-described lower limit value, interlayer delamination during the use can be inhibited, which is preferred. The interlayer adhesive strength in a water-absorbed state can be adjusted to be equal to or more than the above-described lower limit value by adjusting, for example, the press pressure and/or the press time. An upper limit of the interlayer adhesive strength in a water-absorbed state is not particularly limited; however, it is usually 3 N/mm$^2$ or less.

The interlayer adhesive strength of the formed plate in a dry state or a water-absorbed state can be measured by the method described below in the section of Examples.

[Examples]

The present invention will now be described in more detail by way of Examples; however, the present invention is not limited by the below-described Examples by any means. The physical properties in Examples and Comparative Examples were measured or evaluated by the below-described respective procedures.

[Pore Volume]

Two test pieces of about 1 cm-square in size were cut out from a formed plate to be measured, subsequently dried at 105°C ± 5°C for at least 12 hours, placed in a desiccator that had been humidity-conditioned with silica gel, and then left to stand until the temperature reached 20°C ± 1.5°C. For these test pieces, the pore size distribution was measured by a mercury intrusion method using a mercury intrusion porosimetry pore volume analyzer ("MicroActive AutoPore V9600" manufactured by Micromeritics Instrument Corporation). From the logarithmic differential pore volumes obtained from the thus measured pore size distribution, a pore volume (A) in a range of 660 to 9,100 nm and a pore volume (B) in a range of 6 to 560 nm were determined for each test piece. Using the following equation, a ratio of the pore volume (B) with respect to the pore volume (A) was calculated for each test piece, and an average of the thus calculated values was adopted as the pore volume ratio (B)/(A) of the formed plate:

Pore volume ratio (B)/(A) = {Pore volume (B) in range of 6 to 560 nm}/{Pore volume (A) in range of 660 to 9,100 nm}

[Thickness]

The thickness of a formed plate to be measured was measured at six spots using digital calipers, and an average of the thus measured values was defined as the thickness of the formed plate.

[Bulk Density]

The bulk density was measured in accordance with JIS A5430:2018. Specifically, four strip-shaped test pieces of about 180 mm in length and about 50 mm in width were cut out from a formed plate to be measured, and these test pieces were subsequently put into a stirrer-equipped air dryer and dried at 105°C ± 5°C for 24 hours. Thereafter, the test pieces were taken out, placed in a desiccator that had been humidity-conditioned with silica gel, and then left to stand until the temperature reached 20°C ± 1.5°C, after which the mass and the volume of each test piece were measured, and the bulk density was determined. An average value of the thus obtained values was defined as the bulk density of the formed plate.

[Flexural Strength]

Eight strip-shaped test pieces of about 180 mm in length and about 50 mm in width were cut out from a formed plate to be measured.

In order to measure the flexural strength in a dry state, first, four test pieces were dried for 72 hours in a stirrer-equipped air dryer set at 40°C. Subsequently, these test pieces were taken out, placed in a desiccator that had been humidity-conditioned with silica gel, and then left to stand until the temperature reached 20°C $\pm$ 1.5°C. The flexural strength of each test piece was measured in accordance with JIS A1408:2017, and an average of the thus measured values was adopted as the flexural strength of the formed plate in a dry state.

In order to measure the flexural strength in a water-absorbed state, first, four test pieces were immersed for 72 hours in water adjusted to 20°C. Subsequently, these test pieces were taken out, and water adhering to the surface was wiped off, immediately after which the flexural strength of each test piece was measured in accordance with JIS A1408:2017, and an average of the thus measured values was adopted as the flexural strength of the formed plate in a water-absorbed state.

The measurement of the flexural strength in a dry state and that of the flexural strength in a water-absorbed state were performed using AUTOGRAPH "AG50kNX" manufactured by Shimadzu Corporation at a bending span of 14.6 cm and a test speed (loading head speed) of 20 mm/min by a center loading method.

[Impact Strength]

Six Type 1 test pieces according to JIS K7111-1:2012 were cut out from a formed plate to be measured.

In order to measure the impact strength in a dry state, first, three test pieces were dried for 72 hours in a stirrer-equipped air dryer set at 40°C. Subsequently, these test pieces were taken out, placed in a desiccator that had been humidity-conditioned with silica gel, and then left to stand until the temperature reached 20°C $\pm$ 1.5°C. The impact strength (unnotched) of each test piece was measured in accordance with JIS K7111-1:2012, and an average of the thus measured values was adopted as the impact strength of the formed plate in a dry state.

In order to measure the impact strength in a water-absorbed state, first, three test pieces were immersed for 72 hours in water adjusted to 20°C. Subsequently, these test pieces were taken out, and water adhering to the surface was wiped off, immediately after which the impact strength (unnotched) of each test piece was measured in accordance with JIS K7111-1:2012, and an average of the thus measured values was adopted as the impact strength of the formed plate in a water-absorbed state.

The measurement of the impact strength in a dry state and that of the impact strength in a water-absorbed state were performed using a Charpy (digital) impact tester, model DG-CB manufactured by Toyo Seiki Seisaku-sho, Ltd.

[Dimensional Change Ratio]

The dimensional change ratio (length change ratio) of a formed plate was measured in accordance with JIS A5430:2018. Specifically, three strip-shaped test pieces of about 160 mm in length and about 50 mm in width were cut out from a formed plate to be measured, and these test pieces were subsequently put into a dryer, after which the temperature inside the dryer was maintained at 60°C $\pm$ 3°C for 24 hours. Then, the test pieces were taken out, placed in a desiccator that had been humidity-conditioned with silica gel, and then left to stand until the temperature reached 20°C $\pm$ 1.5°C. Next, a milky glass was pasted to each test piece, gauge lines were drawn such that the distance therebetween was about 140 mm, and the length between the gauge lines was measured using a comparator having an accuracy of 1/500 mm and defined as $L_1$ (mm). Thereafter, the test pieces were laid on one end such that the longitudinal direction of each test piece was horizontally arranged, and these test pieces were immersed in water at 20°C $\pm$ 1.5°C with the upper end of each test piece being positioned at about 30 mm below the water surface. After a lapse of 24 hours, the test pieces were taken out of water, and water adhering to the surface was wiped off, after which the length between the gauge lines was measured again, and the thus measured length was defined as $L_2$ (mm). Using the following equation, the rate (%) of dimensional change due to water absorption was calculated for each test piece, and an average of the thus calculated values was adopted as the dimensional change ratio of the formed plate:

$$\text{Rate of dimensional change due to water absorption} = \{(L_2 - L_1)/L_1\} \times 100$$

[Water Absorption Rate]

The water absorption rate of a formed plate was measured in accordance with JIS A5430:2018. Specifically, four strip-shaped test pieces of about 180 mm in length and about 50 mm in width were cut out from a formed plate to be measured, and these test pieces were immersed in water at 20°C ± 1.5°C. After a lapse of 24 hours, the test pieces were taken out, water adhering to the surface was wiped off, and this was immediately followed by measurement of the mass of each test piece (mass $W_3$ of each test piece in a water-absorbed state). Next, these test pieces were put into a stirrer-equipped dryer adjusted at 105°C ± 5°C, dried for 24 hours, and then taken out, after which the test pieces were placed in a desiccator that had been humidity-conditioned with silica gel, and then left to stand until the temperature reached a room temperature of 20°C ± 1.5°C. Thereafter, the mass of each test piece (mass $W_0$ of each test piece in a dry state) was measured. The water absorption rate (%) of each test piece was calculated using the following equation, and an average of the thus calculated values was adopted as the water absorption rate of the formed plate:

$$\text{Water absorption rate} = \{(W_3 - W_0)/W_0\} \times 100$$

[Interlayer Adhesive Strength]

Eight test pieces of about 40 mm × about 40 mm in size were cut out from a formed plate to be measured.
In order to measure the interlayer adhesive strength in a dry state, first, a steel jig of about 40 mm × about 40 mm in size was adhered to both the front and the back of four test pieces in an air-dried state using an epoxy resin-based adhesive, and these test pieces were left to stand at room temperature for at least 24 hours so as to harden the epoxy resin-based adhesive and thereby obtain a sufficient adhesive strength, after which the test pieces were dried for 72 hours in a stirrer-equipped air dryer set at 40°C. Using AUTOGRAPH AG5000-B manufactured by Shimadzu Corporation, the test pieces were each pulled perpendicular to the adhesion surface at a rate of 0.5 mm/min, and a maximum tensile load in this process was read. The interlayer adhesive strength of each test piece was calculated by dividing the maximum tensile load by the area of the test piece, and an average of the thus calculated values was adopted as the interlayer adhesive strength of the formed plate in a dry state.
In order to measure the interlayer adhesive strength in a water-absorbed state, first, a steel jig of about 40 mm × about 40 mm in size was adhered to both the front and the back of four test pieces in an air-dried state using an epoxy resin-based adhesive, and these test pieces were left to stand at room temperature for at least 24 hours so as to harden the epoxy resin-based adhesive. Subsequently, the test pieces were immersed for 72 hours in water adjusted to 20°C. The test pieces were taken out, and water adhering to the surface was wiped off, immediately after which the test pieces were each pulled perpendicular to the adhesion surface at a rate of 0.5 mm/min using AUTOGRAPH AG5000-B manufactured by Shimadzu Corporation, and a maximum tensile load in this process was read. The interlayer adhesive strength of each test piece was calculated by dividing the maximum tensile load by the area of the test piece, and an average of the thus calculated values was adopted as the interlayer adhesive strength of the formed plate in a water-absorbed state.

[Yield Rate in Papermaking Step]

The yield rate in the papermaking step (the step of making a slurry into paper using a cylinder mesh) was determined for each of Examples and Comparative Examples. Specifically, a slurry loaded to a cylinder mesh was scooped, and the mass (A1) thereof was measured. Solids were recovered by filtration using a filtration apparatus (a Nutsche and a suction bottle) and dried in a dryer set at 105°C for at least 12 hours until the dry mass was constant, and the mass (B1) of the solids was measured. The concentration $C_1$ of the slurry loaded to the cylinder mesh was calculated using the following equation:

$$\text{Concentration } C_1 = (B1/A1) \times 100$$

In the same manner, the slurry that passed through the cylinder mesh was scooped, and the concentration $C_2$ of this slurry was calculated using the following equation:

$$\text{Concentration } C_2 = (B2/A2) \times 100$$

(wherein, A2 represents the mass of the slurry that was scooped after passing through the cylinder mesh, and B2 represents the mass of the solids of the slurry).
The yield rate in the papermaking step was calculated using the following equation:

$$\text{Yield rate (\%) in papermaking step} = \{(C_1 - C_2)/C_1\} \times 100$$

[Total Heat Value]

The total heat value was determined by the exothermic test prescribed in JIS A5430:2018. Specifically, two 99 $\pm$ 1 mm-square test pieces were cut out from a formed plate to be measured, and maintained at a temperature of 23°C $\pm$ 2°C and a relative humidity of 50 $\pm$ 5% until the mass was constant, after which the exothermic test was conducted. The heating time was 20 minutes. An average of the total heat values of the test pieces was adopted as the total heat value of the formed plate.

The fibers shown in Table 1 below were used in Examples and Comparative Examples.

[Table 1]

| Table 1: Fibers used in Examples and Comparative Examples | | | | |
|---|---|---|---|---|
| Type | Fineness [dtex] | Average fiber diameter [$\mu$m] | Aspect ratio [-] | Fiber tensile strength [cN/dtex] |
| Polyvinyl alcohol fibers 1 | 0.5 | 7.0 | 571 | 14.5 |
| Polyvinyl alcohol fibers 2 | 2.0 | 14.0 | 429 | 14.9 |
| Polyvinyl alcohol fibers 3 | 4.0 | 20.0 | 300 | 13.8 |
| Polyvinyl alcohol fibers 4 | 7.0 | 26.0 | 231 | 13.8 |
| Polyvinyl alcohol fibers 5 | 2.0 | 14.0 | 429 | 12.6 |
| Polypropylene fibers | 2.0 | 17.0 | 353 | 5.3 |

[Example 1]

A pulp (NBKP, CELLOFIBER manufactured by Paltex Co., Ltd., CSF value: 115 mL) was dispersed in water. To the resulting dispersion, a heavy calcium carbonate (Blaine specific surface area: 4,000 cm$^2$/g) and an ordinary Portland cement (ordinary Portland cement manufactured by Taiheiyo Cement Corporation) were added, and the resultant was mixed. To the thus obtained mixture, polyvinyl alcohol-based fibers 1 ("PVA1" in Table 2) were added, followed by further mixing. The ratios of these components were as shown in Table 2, and a curable composition having a solid concentration of 16% by mass was obtained.

The thus obtained curable composition was transferred to a feed tank of a quantitative feeding apparatus, and supplied from the feed tank to a cylinder mesh. The solid concentration of the curable composition was adjusted to be 4% by mass with process circulating water, and papermaking was performed using a mini Hatschek machine.

Subsequently, the papermaking sheet obtained in the cylinder mesh step was disposed in 15 layers using a making roll, and liquid was extracted out by pressing the thus layered papermaking sheet for 20 minutes while applying thereto a pressure of 21.6 MPa. This liquid-extracted sheet was cured for 24 hours in a thermo-hygrostat curing apparatus at a temperature of 50°C under a saturated humidity (RH98%) condition, subsequently wrapped with a wrapping sheet, and then cured for another 13 days in an environment having a temperature of 20°C and a humidity of 60% (curing was performed for a total material age of 14 days). The sheet from which the wrapping sheet was removed was dried for 2 hours in a roll-type dryer set at a temperature of 120°C, whereby a formed plate was obtained.

For the thus obtained formed plate, various measurements and evaluations were performed. The results thereof are shown in Table 2. In Table 2, two values are provided for each Example with regard to the flexural strength, the impact strength, and the interlayer adhesive strength, and the upper values indicate values in a dry state while the lower values indicate values in a water-absorbed state.

[Examples 2 to 17 and Comparative Examples 1 to 3]

Formed plates were obtained in the same manner as in Example 1, except that the components were used at the respective ratios shown in Table 2, and various measurements and evaluations were performed for the thus obtained formed plates. The results thereof are shown in Tables 2 and 3. It is noted here that, in Example 10, a heavy calcium carbonate having a Blaine specific surface area of 2,500 cm$^2$/g and a heavy calcium carbonate having a Blaine specific surface area of 6,200 cm$^2$/g were used as calcium carbonates at a mass ratio of 50:50. Accordingly, the Blaine specific surface area of the calcium carbonates in Example 10 is calculated to be 4,500 cm$^2$/g (= 2,500 $\times$ 0.5 + 6,500 $\times$ 0.5).

Further, in those Examples in which a fly ash or a silica fume was added, the fly ash or the silica fume was also added at the time of adding the ordinary Portland cement.

[Example 18]

A formed plate was obtained in the same manner as in Example 1, except that PVA2 was used in place of PVA1 and the pressure applied during the pressing was changed from 21.6 MPa to 7.85 MPa, and various measurements and evaluations were performed for the thus obtained formed plate. The results thereof are shown in Table 2.

[Table 2]

Table 2: Composition and Results

| Example | Composition | | | | | | | | Measurement results and evaluation results | | | | | | | | | | | |
|---|---|---|---|---|---|---|---|---|---|---|---|---|---|---|---|---|---|---|---|---|
| | Fiber (type) [% by mass] | Pulp [% by mass] | Calcium carbonate (Blaine specific surface area) [% by mass] | Cement [% by mass] | Mica [% by mass] | Fly ash [% by mass] | Silica fume [% by mass] | Pore volume (A) [mL/g] | Pore volume (B) [mL/g] | Ratio (B)/(A) [-] | Thickness [mm] | Bulk density [g/cm$^3$] | Flexural strength [N/mm$^2$] | Impact strength [kJ/m$^2$] | Dimensional change ratio [%] | Water absorption rate [%] | Interlayer adhesive strength [N/mm$^2$] | Yield rate [%] | Total heat value [MJ/m$^2$] |
| 1 | 1.5 (PVA1) | 3 | 62.5 (4,000) | 33 | - | - | - | 0.79 | 1.54 | 1.95 | 5.65 | 1.65 | 31.1 / 18.3 | 2.4 / 4.1 | 0.098 | 18.3 | 3.28 / 0.70 | 95.2 | 4.35 |
| 2 | 1.5 (PVA1) | 3 | 62.5 (6,500) | 33 | - | - | - | 0.58 | 1.94 | 3.35 | 5.40 | 1.75 | 36.4 / 21.3 | 2.7 / 4.0 | 0.093 | 17.4 | 3.44 / 0.79 | 94.6 | 4.32 |
| 3 | 1.5 (PVA1) | 3 | 62.5 (8,000) | 33 | - | - | - | 0.59 | 1.99 | 3.37 | 5.43 | 1.70 | 33.7 / 22.1 | 2.4 / 4.2 | 0.094 | 17.2 | 3.50 / 0.88 | 93.9 | 4.21 |
| 4 | 1.5 (PVA1) | 3 | 62.5 (11,000) | 33 | - | - | - | 0.43 | 2.16 | 5.00 | 5.43 | 1.72 | 33.6 / 22.5 | 2.4 / 3.7 | 0.091 | 16.7 | 3.04 / 0.66 | 86.3 | 4.28 |
| 5 | 1.5 (PVA1) | 3 | 66.0 (4,000) | 29.5 | - | - | - | 0.74 | 1.71 | 2.31 | 5.77 | 1.63 | 31.3 / 17.3 | 2.7 / 3.7 | 0.091 | 19.2 | 2.56 / 0.58 | 94.1 | 5.74 |
| 6 | 1.5 (PVA2) | 3 | 62.5 (4,000) | 33 | - | - | - | 0.44 | 1.65 | 3.73 | 5.42 | 1.74 | 33.8 / 23.7 | 3.2 / 5.9 | 0.099 | 15.6 | 3.41 / 0.73 | 92.4 | 4.21 |
| 7 | 1.5 (PVA3) | 3 | 62.5 (4,000) | 33 | - | - | - | 0.75 | 1.55 | 2.07 | 5.68 | 1.72 | 28.5 / 21.6 | 2.7 / 5.1 | 0.098 | 17.4 | 3.16 / 0.68 | 91.5 | 4.27 |
| 8 | 1.5 (PVA4) | 3 | 62.5 (4,000) | 33 | - | - | - | 0.77 | 1.53 | 1.99 | 5.71 | 1.72 | 26.3 / 19.5 | 3.2 / 3.9 | 0.099 | 16.8 | 3.07 / 0.64 | 90.7 | 4.35 |

16

(continued)

Table 2: Composition and Results

| Example | Composition | | | | | | | Measurement results and evaluation results | | | | | | | | | | | |
|---|---|---|---|---|---|---|---|---|---|---|---|---|---|---|---|---|---|---|---|
| | Fiber (type) [% by mass] | Pulp [% by mass] | Calcium carbonate (Blaine specific surface area) [% by mass] | Cement [% by mass] | Mica [% by mass] | Fly ash [% by mass] | Silica fume [% by mass] | Pore volume (A) [mL/g] | Pore volume (B) [mL/g] | Ratio (B)/(A) [-] | Thickness [mm] | Bulk density [g/cm³] | Flexural strength [N/mm²] | Impact strength [kJ/m²] | Dimensional change ratio [%] | Water absorption rate [%] | Interlayer adhesive strength [N/mm²] | Yield rate [%] | Total heat value [MJ/m²] |
| 9 | 1.5 (PP) | 3 | 62.5 (4,000) | 33 | - | - | - | 0.79 | 1.58 | 2.00 | 5.72 | 1.69 | 20.5 15.7 | 2.9 3.8 | 0.092 | 16.9 | 2.93 0.60 | 91.2 | 4.47 |
| 10 | 1.5 (PVA1) | 3 | 62.5 (2,500+6,500) | 33 | - | - | - | 0.82 | 1.63 | 1.99 | 5.52 | 1.71 | 34.8 21.0 | 2.8 3.3 | 0.084 | 18.3 | 3.12 0.66 | 91.6 | 5.17 |
| 11 | 1.5 (PVA1) | 3 | 42.5 (4,000) | 33 | - | 20 | - | 0.84 | 1.82 | 2.17 | 5.54 | 1.72 | 34.7 22.6 | 2.2 3.1 | 0.114 | 17.3 | 3.52 0.84 | 94.4 | 4.88 |
| 12 | 1.5 (PVA1) | 5 | 62.5 (4,000) | 31 | - | - | - | 0.90 | 1.72 | 1.91 | 5.95 | 1.61 | 29.5 16.2 | 2.5 4.2 | 0.118 | 20.5 | 3.03 0.65 | 95.6 | 6.05 |
| 13 | 1.5 (PVA1) | 3 | 57.5 (4,000) | 33 | - | - | 5 | 0.74 | 1.82 | 2.46 | 5.50 | 1.75 | 32.8 25.1 | 2.2 3.2 | 0.093 | 17.5 | 3.54 0.75 | 94.4 | 4.64 |
| 14 | 1.5 (PVA5) | 3 | 62.5 (4,000) | 33 | - | - | - | 0.71 | 1.37 | 1.92 | 5.64 | 1.63 | 26.5 16.4 | 2.8 5.1 | 0.087 | 16.3 | 3.32 0.69 | 92.8 | 4.84 |
| 15 | 1.5 (PVA2) | 3 | 57.5 (4,000) | 33 | - | - | 5 | 0.51 | 1.08 | 2.13 | 5.46 | 1.79 | 34.9 27.2 | 2.4 3.1 | 0.104 | 16.7 | 3.52 0.77 | 93.8 | 4.75 |
| 16 | 1.5 (PVA2) | 3 | 54.5 (4,000) | 33 | - | - | 8 | 0.33 | 1.29 | 3.88 | 5.51 | 1.75 | 34.1 27.0 | 1.9 2.9 | 0.094 | 15.9 | 3.59 0.82 | 94.2 | 4.41 |

EP 4 428 110 A1

17

Table 2: Composition and Results

| Example | Composition | | | | | | | | Measurement results and evaluation results | | | | | | | | | | |
|---|---|---|---|---|---|---|---|---|---|---|---|---|---|---|---|---|---|---|---|---|
| | Fiber (type) [% by mass] | Pulp [% by mass] | Calcium carbonate (Blaine specific surface area) [% by mass] | Cement [% by mass] | Mica [% by mass] | Fly ash [% by mass] | Silica fume [% by mass] | Pore volume (A) [mL/g] | Pore volume (B) [mL/g] | Ratio (B)/(A) [-] | Thickness [mm] | Bulk density [g/cm$^3$] | Flexural strength [N/mm$^2$] | Impact strength [kJ/m$^2$] | Dimensional change ratio [%] | Water absorption rate [%] | Interlayer adhesive strength [N/mm$^2$] | Yield rate [%] | Total heat value [MJ/m$^2$] |
| 17 | 1.5 (PVA2) | 3 | 50.5 (4,000) | 33 | - | - | 12 | 0.36 | 1.29 | 3.54 | 5.48 | 1.75 | 32.8 28.4 | 2.2 3.2 | 0.086 | 15.5 | 3.67 0.89 | 95.5 | 4.33 |
| 18 | 1.5 (PVA2) | 3 | 62.5 (4,000) | 33 | - | - | - | 0.65 | 2.07 | 3.19 | 5.76 | 1.66 | 31.2 18.8 | 3.6 6.5 | 0.084 | 19.4 | 2.69 0.52 | 92.9 | 4.53 |

[Table 3]

Table 3: Composition and Results

| Comparative Example | Composition | | | | | | | Measurement results and evaluation results | | | | | | | | | | | |
|---|---|---|---|---|---|---|---|---|---|---|---|---|---|---|---|---|---|---|---|
| | Fiber (type) [% by mass] | Pulp [% by mass] | Calcium carbonate (Blaine specific surface area) [% by mass] | Cement [% by mass] | Mica [% by mass] | Fly ash [% by mass] | Silica fume [% by mass] | Pore volume (A) [mL/g] | Pore volume (B) [mL/g] | Ratio (B)/(A) [-] | Thickness [mm] | Bulk density [g/cm$^3$] | Flexural strength [N/mm$^2$] | Impact strength [kJ/m$^2$] | Dimensional change ratio [%] | Water absorption rate [%] | Interlayer adhesive strength [N/mm$^2$] | Yield rate [%] | Total heat value [MJ/m$^2$] |
| 1 | 1.5 (PVA1) | 3 | 62.5 (2,500) | 33 | - | - | - | 0.90 | 1.43 | 1.59 | 5.75 | 1.63 | 30.7 17.6 | 2.9 3.5 | 0.104 | 19.3 | 2.85 0.46 | 84.8 | 6.69 |
| 2 | 1.5 (PVA1) | 3 | 71 (4,000) | 24.5 | - | - | - | 0.77 | 1.87 | 2.44 | 5.80 | 1.64 | 28.8 14.2 | 3.4 4.8 | 0.072 | 20.4 | 1.60 0.38 | 88.6 | 6.72 |
| 3 | 1.5 (PVA1) | 7.5 | 62.5 (4,000) | 28.5 | - | - | - | 1.08 | 1.46 | 1.35 | 6.24 | 1.56 | 26.2 13.4 | 2.7 4.4 | 0.134 | 25.3 | 2.27 0.43 | 94.7 | 9.46 |

As shown in Table 2, those formed plates which contained a substance not involved in a pozzolanic reaction, a cement, synthetic fibers, and a pulp at a specific ratio and had a specific value of the pore volume ratio (B)/(A) exhibited a high flexural strength and a low dimensional change ratio.

On the other hand, from Table 3, it is seen that the formed plate of Comparative Example 1, which did not have a specific value of the pore volume ratio (B)/(A), exhibited a lower flexural strength and a higher dimensional change ratio than those of the formed plates of corresponding Examples (Examples 1 to 4). It is also seen that the interlayer adhesive strength as well as the yield rate in the papermaking step were low in Comparative Example 1. It is seen that the formed plate of Comparative Example 2, which did not contain the respective components at a specific ratio, exhibited a lower flexural strength than that of the formed plates of corresponding Examples (Examples 1 and 5). It is also seen that the interlayer adhesive strength was low in Comparative Example 2. It is seen that the formed plate of Comparative Example 3, which did not contain the respective components at a specific ratio and did not have a specific value of the pore volume ratio (B)/(A), exhibited a lower flexural strength and a higher dimensional change ratio than those of the formed plates of corresponding Examples (Examples 1 and 5). It is also seen that the interlayer adhesive strength was low and the total heat value was high in Comparative Example 3.

Further, the effect of the ratio of silica fume as an optional component on the papermaking property in the cylinder mesh step at the time of producing a formed plate was visually evaluated based on the following evaluation criteria.

A: No dripping of the curable composition from the cylinder mesh was observed during the scooping of the curable composition.

B: Dripping of the curable composition from the cylinder mesh was observed at one spot per 30 cm width of the cylinder mesh during the scooping of the curable composition.

C: Dripping of the curable composition from the cylinder mesh was observed at two or more spots per 30 cm width of the cylinder mesh during the scooping of the curable composition.

[Table 4]

| Example | Composition | | | | | | | Evaluation results |
| | Fiber (type) [% by mass] | Pulp [% by mass] | Calcium carbonate (Blaine specific surface area) [% bv mass] | Cement [% by mass] | Mica [% by mass] | Flyash [% by mass] | Silica fume [% by mass] | Papermaking property |
|---|---|---|---|---|---|---|---|---|
| 6 | 1.5 (PVA2) | 3 | 62.5 (4,000) | 33 | - | - | - | A |
| 15 | 1.5 (PVA2) | 3 | 57.5 (4,000) | 33 | - | - | 5 | A |
| 16 | 1.5 (PVA2) | 3 | 54.5 (4,000) | 33 | - | - | 8 | A |
| 17 | 1.5 (PVA2) | 3 | 50.5 (4,000) | 33 | - | - | 12 | B |

[Industrial Applicability]

The formed plate of the present invention has a high flexural strength and a low dimensional change ratio. This formed plate of the present invention can be preferably utilized as a building material (e.g., a ceiling material, an interior material, an exterior material, or a flooring material) or a civil engineering material.

**Claims**

**1.** A porous formed plate, comprising:

35 to 70% by mass of a substance not involved in a pozzolanic reaction;
20 to 61.5% by mass of a cement;

1 to 3% by mass of synthetic fibers; and

2.5 to 7% by mass of a pulp,

wherein, in a pore size distribution of the formed plate that is determined by a mercury intrusion method, a ratio (B)/(A) of a pore volume (B) in a range of 6 to 560 nm with respect to a pore volume (A) in a range of 660 to 9,100 nm is 1.70 to 6.0.

2.  The formed plate according to claim 1, wherein the substance not involved in a pozzolanic reaction is at least one substance selected from the group consisting of a calcium carbonate, a silica powder, and a talc.

3.  The formed plate according to claim 2, wherein the calcium carbonate is a heavy calcium carbonate.

4.  The formed plate according to claim 1, further comprising at least one substance selected from the group consisting of a mica, a fly ash, and a silica fume.

5.  The formed plate according to claim 1, wherein a total content of the synthetic fibers and the pulp is 7% by mass or less with respect to a total mass of the formed plate.

6.  The formed plate according to claim 1, wherein the synthetic fibers have an average fiber diameter of 50 $\mu$m or less.

7.  The formed plate according to claim 6, wherein the average fiber diameter of the synthetic fibers is 5 $\mu$m to 40 $\mu$m.

8.  The formed plate according to claim 1, wherein the synthetic fibers have an aspect ratio of 150 to 1,000.

9.  The formed plate according to claim 1, wherein the synthetic fibers are at least one selected from the group consisting of polyvinyl alcohol-based fibers, polyethylene fibers, polypropylene fibers, acrylic fibers, aramid fibers, and nylon fibers.

10. The formed plate according to claim 1, having a water absorption rate of 15% to 28% as measured in accordance with JIS A5430:2018.

11. The formed plate according to claim 1, having a total heat value of 8.0 MJ/m$^2$ or less as measured in accordance with the exothermic test prescribed in JIS A5430:2018.

12. The formed plate according to claim 1, having a bulk density of 1.50 g/cm$^3$ or more as measured in accordance with JIS A5430:2018.

13. The formed plate according to claim 1, having a flexural strength of 15 N/mm$^2$ or more in a water-absorbed state as measured in accordance with JIS A1408:2017.

14. The formed plate according to claim 1, having a water absorption rate of 26% or lower as measured in accordance with JIS A5430:2018.

15. The formed plate according to claim 1, wherein the pore volume (B) is 2.50 mL/g or less.

## INTERNATIONAL SEARCH REPORT

| International application No. |
| --- |
| **PCT/JP2022/040788** |

| A. | CLASSIFICATION OF SUBJECT MATTER |
| --- | --- |

*C04B 28/02*(2006.01)i; *C04B 14/04*(2006.01)i; *C04B 14/06*(2006.01)i; *C04B 14/20*(2006.01)i; *C04B 14/28*(2006.01)i; *C04B 16/02*(2006.01)i; *C04B 16/06*(2006.01)i; *C04B 18/08*(2006.01)i; *C04B 18/14*(2006.01)i; *C04B 38/00*(2006.01)i

FI: C04B28/02; C04B14/04 Z; C04B14/06 Z; C04B14/28; C04B14/20 A; C04B16/02 Z; C04B16/06 A; C04B16/06 E; C04B18/08 Z; C04B18/14 Z; C04B38/00 301Z

According to International Patent Classification (IPC) or to both national classification and IPC

| B. | FIELDS SEARCHED |
| --- | --- |

Minimum documentation searched (classification system followed by classification symbols)

C04B28/02; C04B14/04; C04B14/06; C04B14/20; C04B14/28; C04B16/02; C04B16/06; C04B18/08; C04B18/14; C04B38/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2005-205879 A (A & A MATERIAL CORP) 04 August 2005 (2005-08-04) paragraphs [0041]-[0043], table 1, example 3 | 1-15 |
| A | JP 2001-048630 A (ASANO SLATE CO LTD) 20 February 2001 (2001-02-20) paragraph [0024], example 7 | 1-15 |
| A | JP 2004-123500 A (A & A MATERIAL CORP) 22 April 2004 (2004-04-22) paragraph [0016] | 1-15 |
| A | JP 7-237948 A (MATSUSHITA ELECTRIC WORKS LTD) 12 September 1995 (1995-09-12) paragraphs [0010], [0011], [0014], example 4 | 1-15 |
| A | US 2005/0072056 A1 (SAINT-GOBAIN MATERIAUX DE CONSTRUCTION S.A.S.) 07 April 2005 (2005-04-07) paragraphs [0036]-[0044], example 2 | 1-15 |
| A | JP 2003-292365 A (A & A MATERIAL CORP) 15 October 2003 (2003-10-15) entire text, all drawings | 1-15 |

| ✓ Further documents are listed in the continuation of Box C. | ✓ See patent family annex. |
| --- | --- |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **13 January 2023** | **31 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/040788**

| C. | DOCUMENTS CONSIDERED TO BE RELEVANT | |
|---|---|---|
| Category* | Citation of document, with indication, where appropriate, of the relevant passages | Relevant to claim No. |
| A | JP 2007-001043 A (A & A MATERIAL CORP) 11 January 2007 (2007-01-11)<br>entire text, all drawings | 1-15 |
| A | JP 61-026544 A (KURARAY CO LTD) 05 February 1986 (1986-02-05)<br>entire text, all drawings | 1-15 |

Form PCT/ISA/210 (second sheet) (January 2015)

## INTERNATIONAL SEARCH REPORT
### Information on patent family members

International application No.

**PCT/JP2022/040788**

| Patent document cited in search report | | | Publication date (day/month/year) | Patent family member(s) | Publication date (day/month/year) |
|---|---|---|---|---|---|
| JP | 2005-205879 | A | 04 August 2005 | (Family: none) | |
| JP | 2001-048630 | A | 20 February 2001 | (Family: none) | |
| JP | 2004-123500 | A | 22 April 2004 | (Family: none) | |
| JP | 7-237948 | A | 12 September 1995 | (Family: none) | |
| US | 2005/0072056 | A1 | 07 April 2005 | CN 1863750 A<br>p. 7, line 24 to p. 8, line 12, example 2<br>FR 2860511 A | |
| JP | 2003-292365 | A | 15 October 2003 | (Family: none) | |
| JP | 2007-001043 | A | 11 January 2007 | (Family: none) | |
| JP | 61-026544 | A | 05 February 1986 | (Family: none) | |

Form PCT/ISA/210 (patent family annex) (January 2015)

24

**EP 4 428 110 A1**

**REFERENCES CITED IN THE DESCRIPTION**

**Patent documents cited in the description**

- JP 2021179694 A
- US 200572056
- JP 2005205879 A
- CN 108276023